# EUROPEAN PATENT SPECIFICATION

(11) **EP 1 783 954 B1**
(45) Date of publication and mention of the grant of the patent: **24.06.2009**
(21) Application number: 06255625.3
(22) Date of filing: 01.11.2006
(51) Int. Cl.: H04L 12/24

(54) **System and method for discovering network resources**
Vorrichtung und Verfahren zum Entdecken von Netzwerksresourcen
Système et procede pour découvrir des ressources de réseau

(30) Priority: 02.11.2005 US 265835
(43) Date of publication of application: 09.05.2007
(73) Proprietor: Ricoh Company, Ltd., Tokyo 143-8555 (JP)
(72) Inventor: Regnier, Alain c/o Ricoh Corporation, Cupertino, California 95014-5924 (US)
(74) Representative: Leeming, John Gerard

(56) References cited:
- US-A1- 2004 267 876
- DR. GÜNTHER HARING: "Systemarchitektur und Dinste für Allgegenwärtige, Kontext- Sensitive Informationssystem" ENDBERICHT ZUM FORSCHUNGSAUFTRAG DES BUNDESMINISTERIUMS FÜR VERKEHR, INNOVATION UND TECHNOLOGIE, 1 January 2003 (2003-01-01), pages 1-135, XP002420364 Universität Wien

## Description

### FIELD OF THE INVENTION

The present invention relates generally to networking, and more specifically, to an approach for discovering network resources.

### BACKGROUND OF THE INVENTION

The approaches described in this section are approaches that could be pursued, but not necessarily approaches that have been previously conceived or pursued. Therefore, unless otherwise indicated, the approaches described in this section may not be prior art to the claims in this application and are not admitted to be prior art by inclusion in this section.

One of the issues in networking is how client devices become aware of network resources that are available to them. As used herein, the term "network resource" refers to any type of network resource. Example network resources include, without limitation, a network device or element, a server, a Web server, and any type of network service. When a client device first connects to a network (or reconnects), it may not be aware of the network resources that are currently available to it. This issue is conventionally addressed using a network resource discovery mechanism that attempts to identify network resources that are connected to the network and that are available and ready for use. Conventional network resource discovery mechanisms are based upon a polling messaging scheme, where a client interrogates Web servers or URLs to determine whether an available Web service exists. For example, a client may request from a particular Web server, one or more documents that describe the Web services available through the particular Web server. The client analyzes the one or more documents to identify the Web services that are available to it. The.one or more documents obtained from the particular Web server may also describe Web services available through other Web servers.

One of the problems with conventional network service discovery approaches is that they tend to be very message intensive. A significant number of message and files must be transmitted over a network to complete the discovery process. The messages and files are often in a markup language, such as XML, and contain large amounts of data, typically in the form of large numbers of long text strings. Thus, conventional network resource discovery processes can consume a significant amount of network bandwidth and computational resources.

Based on the foregoing, there is a need for an approach for discovering network resources that does not suffer from limitations of prior approaches.

"Systemarchitektur und Dienste für Allgegenwärtige, Kontext-Sensitive Informationssysteme", Endbericht zum Forschungsauftrag des Bundesministeriums für Verkehr, Innovation und Technologie, 1 January 2003, pages 1 to 135, by Dr Günther Haring, discloses a device that can dynamically join a network, obtain an IP address, convey its capabilites and learn about the presence and capabilites of other devices automatically. On being plugged into a network, a device can send out multiple SSDP presence announcements advertising the services it supports.

### SUMMARY OF THE INVENTION

An approach is provided for discovering network resources using s Simple Binary Resource Discovery (SBRD) message structure.

According to the present invention, there is provided a network resource configured to:
generate and transmit a plurality of multicast messages to a plurality of recipients over a communications network, wherein:
   each multicast message from the plurality of multicast messages indicates that the network resource is available and ready;
in response to receiving a multicast query message from a particular recipient from the plurality of recipients,
determining whether the multicast query message contains identification.data that identifies the network resource or type data that matches one or more type attributes of the network resource; and
if the multicast query message contains identification data that identifies the network resource or type data that matches one or more type attributes of the network resource, then the network resource generating and transmitting a unicast message to the particular recipient to acknowledge the multicast query message and to indicate that the network resource is available and ready;
**characterised in that:**
   time intervals between the transmission of multicast messages from the plurality of multicast messages increase in duration over time; and
   the network resource further configured to enter a sleep mode after a specified time has elapsed or a specified number of multicast messages have been transmitted by the network resource without the network resource receiving an acknowledge signal.

The increase in duration of the time intervals in between the multicast "Hello" messages may be linear or non-linear, depending upon a particular implementation. The approach is applicable to any type of network resource, such as a network device or element, a server, a Web service, or any other mechanism or process that can be identified by a Uniform Identifier (URI).

According to the present invention, there is provided a method of determining availability of a network resource, in which the network resource:
generates and transmits a plurality of multicast messages to a plurality of recipients over a communications network , wherein:
   each multicast message from the plurality of multicast messages indicates that the network resource is available and ready ;
in response to receiving a multicast query message from a particular recipient from the plurality of recipients, the network resource determines whether the multicast query message contains identification data that identifies the network resource or type data that matches one or more type attributes of the network resource; and
if the multicast query message contains identification data that identifies the network resource or type data that matches one or more type attributes of the network resource, then the network resource generates and transmits a unicast message to the particular recipient to acknowledge the multicast query message and to indicate that the network resource is available and ready ;
**characterised in that:**
   time intervals between the transmission of multicast messages from the plurality of multicast messages increase in duration over time; and
   the network resource enters a sleep mode after a specified time has elapsed or a specified number of multicast messages have been transmitted by the network resource without the network resource receiving an acknowledge signal.

### BRIEF DESCRIPTION OF THE DRAWINGS

In the figures of the accompanying drawings like reference numerals refer to similar elements.
FIG. 1 is a block diagram that depicts an example network arrangement for discovering network resources according to an embodiment of the invention.
FIG. 2 is a flow block diagram that depicts an approach for discovering network resources according to an embodiment of the invention.
FIG. 3 is a table that depicts four different types of messages used with the approach described herein for discovering network resources.
FIG. 4 is a block diagram that depicts an example Simple Binary Resource Discover (SBRD) message structure according to one embodiment of the invention.
FIG. 5 is a block diagram of a computer system on which embodiments of the invention may be implemented.

### DETAILED DESCRIPTION

In the following description, for the purposes of explanation, numerous specific details are set forth in order to provide a thorough understanding of the present invention. It will be apparent, however, to one skilled in the art that the present invention may be practiced without these specific details. In other instances, well-known structures and devices are shown in block diagram form in order to avoid unnecessarily obscuring the present invention. Various aspects of the invention are described hereinafter in the following sections:
I. OVERVIEW
II. ARCHITECTURE
III. RESOURCE DISCOVERY
IV. TRANSMISSION INTERVALS AND TIME-TO-LIVE
V. SIMPLE BINARY MESSAGE STRUCTURE
VI. IMPLEMENTATION MECHANISMS

### I. OVERVIEW

An approach is provided for discovering network resources using s Simple Binary Resource Discovery (SBRD) message structure. According to the approach, a network resource is configured to generate and transmit a plurality of multicast "Hello" messages to a plurality of recipients. Each of the plurality of multicast "Hello" messages indicates that the network resource is available and ready. If the network resource receives a multicast "Query" message from a particular recipient from the plurality of recipients, the network resource determines whether the multicast "Query" message includes identification data that identifies the network resource or type data that matches one or more type attributes of the network resource. If so, then the network resource generates and transmits a unicast "Acknowledge" message to the particular recipient to acknowledge the multicast "Query" message and to indicate that the network resource is available and ready. The "Acknowledge" message also contains additional information about the network resource that is described in more detail hereinafter in Section V. The multicast "Hello" messages, the multicast "Query" message and the unicast "Acknowledge" message all conform to the SBRD message structure to reduce the amount of overhead associated with network resource discovery.

According to one embodiment of the invention, the time intervals in between the multicast "Hello" messages increase in duration over time. The increase in duration may be linear or non-linear, depending upon a particular implementation. The network resource may also be configured to enter an inactive or "sleep" mode in different circumstances. For example, the network resource may enter a sleep mode if the network resource does not receive a multicast "Query" message after a specified time or after transmitting a specified number of multicast "Hello" messages. Other criteria may also be used, depending upon a particular implementation. The network resource sends a multicast "Bye" message indicating that the network resource is entering the sleep mode and will be unavailable. The approach is applicable to any type of network resource, such as a network device or element, a server, a Web service, or any other mechanism or process that can be identified by a Uniform Resource Identifier (URI).

### II. ARCHITECTURE

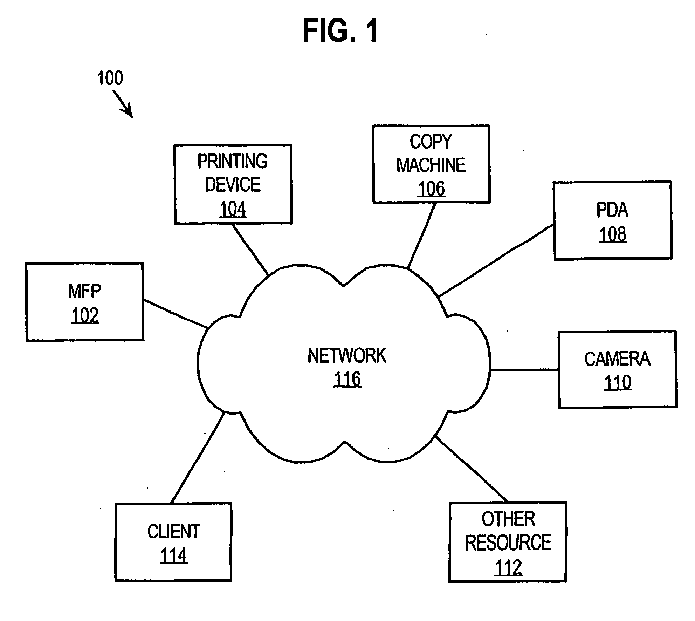

FIG. 1 is a block diagram that depicts an example network arrangement 100 on which embodiments of the invention may be implemented. Network arrangement 100 includes a multifunction peripheral (MFP) 102, a printing device 104, a copy machine 106, a personal digital assistant (PDA) 108, a camera 110, an other resource 112 and a client 114, communicatively coupled via a network 116. MFP 102 is a device that performs one or more functions, such as printing, copying, facsimile and scanning. Network 116 may be implemented by any medium or mechanism that provides for the exchange of data between the various elements depicted in FIG. 1. Examples of network 116 include, without limitation, a network such as a Local Area Network (LAN), Wide Area Network (WAN), Ethernet or the Internet, or one or more terrestrial, satellite or wireless links. Although embodiments of the invention are described herein in the context of the particular network devices depicted in FIG. 1, i.e., MFP 102, printing device 104, copy machine 106, personal digital assistant (PDA) 108 and camera 110, the approach is not limited to these types of network devices and is applicable to any type of other resource 112 that can be configured to perform the functionality described herein.

### III. RESOURCE DISCOVERY

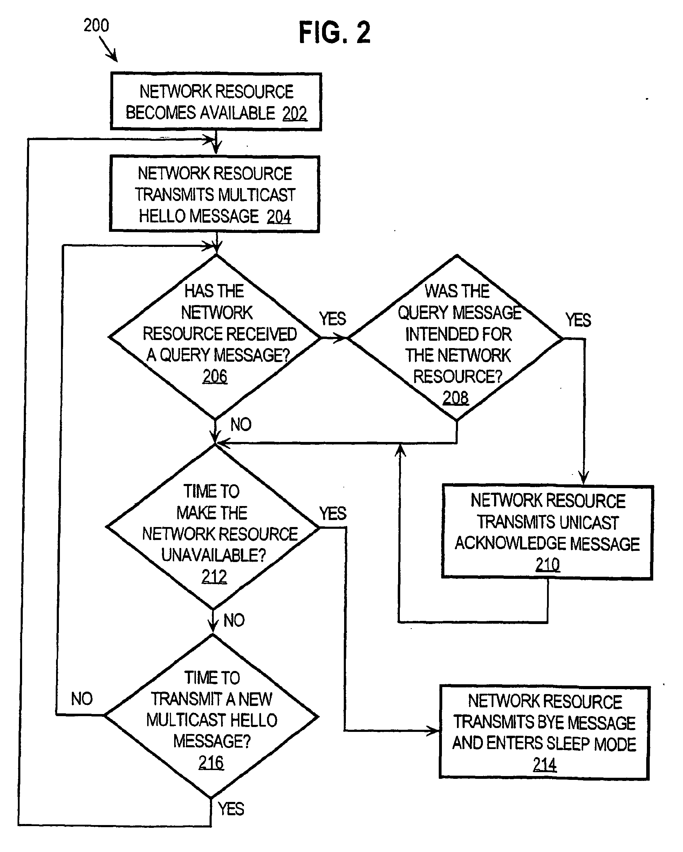

FIG. 2 is a flow diagram 200 that depicts an approach for discovering network resources according to an embodiment of the invention. In step 202, a network resource becomes available. The network resource may be a new network resource that has been put into service, an existing network resource that has just been configured or an existing network resource that has transitioned out of an inactive or sleep mode. For purposes of explanation in this example, it is assumed that MFP 102 is the network resource.

In step 204, the network resource transmits a multicast "Hello" message to a plurality of recipients. The "Hello" message notifies the recipients that the network resource is available and ready. As a multicast message, the "Hello" message is sent to a select group of recipients that may be specified by a variety of criteria. For example, in the Internet Protocol (IP) context, MFP 102 sends the multicast "Hello" message to a particular multicast IP address and port combination, associated with a group of recipients. Recipients must register with the particular group to receive multicast messages sent to the group's IP address or IP address/port combination.

In step 206, a determination is made whether the network resource has received a multicast "Query" message to inquire about the availability of the network resource. The multicast "Query" message may be received from one of the plurality of recipients or from any other network device. In the present example it is assumed that MFP 102 receives a multicast "Query" message from client 114. Multicast "Query" messages are used by clients to search for specific network resources by identification data or for a type of network resource by type data.

If, in step 206, the network resource has received a multicast "Query" message, then in step 208, a determination is made whether the multicast "Query" message was intended for the network resource. According to one embodiment of the invention, the multicast "Query" message is determined to be intended for the network resource if the multicast "Query" message contains either identification data that identifies the network resource or type data that matches a type of the network resource. The determination may be made by the network resource examining the contents of the multicast "Query" message and then comparing the contents to data stored by the network resource. For example, MFP 102 compares the identification data contained in the multicast "Query" message to its MAC address or some other unique identification data. If the identification data contained in the multicast "Query" message matches the MAC address of MFP 102 or the other unique identification data for MFP 102, then the multicast "Query" message was intended for MFP 102. As another example, the network resource may compare the type data contained in the multicast "Query" message to type data maintained by the network resource to determine whether the multicast "Query" message was intended for the network resource. For example, MFP 102 may maintain type data of type "MFP". If the type data contained in the multicast "Query" message specifies "MFP", then the multicast "Query" message was intended for MFP 102 and other network resources of the same type.

If, in step 208, a determination is made that the multicast "Query" message was intended for the network resource, then in step 210, the network resource transmits a unicast "Acknowledge" message to the originator of the multicast "Query" message. The "Acknowledge" message confirms to the originator of the multicast "Query" message that the network resource is available and ready. The "Acknowledge" message also contains additional information about the network resource that is described in more detail hereinafter in Section V. As a unicast message, the "Acknowledge" message is sent only to the originator of the multicast "Query" message. For example, MFP 102 may send an "Acknowledge" message in the form of a UDP datagram to the IP address or IP address and port combination of client 114 to indicate that MFP 102 is available and ready.

If, in step 206, the network resource has not received a "Query" message or if in step 208 the received "Query" message was not intended for the network resource, then in step 212, a determination is made whether it is time to make the network resource unavailable. This determination may be made using a wide variety of criteria, depending upon a particular implementation. For example, MFP 102 may determine that a specified amount of time has elapsed without receiving a "Query" message. As another example, MFP 102 may determine that MFP 102 has issued a specified number of "Hello" messages without receiving a reply or acknowledgement from another device.

If, in step 212, a determination is made that it is time for the network resource to be made unavailable, then in step 214, the network resource transmits a "Bye" or "Sleep" message and enters an inactive state, sometimes referred to as a "sleep" mode. According to one embodiment of the invention, the "Bye" or "Sleep" message is a multicast message sent to a particular IP address or a particular IP address and port combination.

If, in step 212, a determination is made that it is not yet time for the network resource to be made unavailable, then in step 216, a determination is made whether it is time for the network resource to transmit another multicast "Hello" message. This determination may be made based upon a wide variety of criteria, depending upon a particular implementation. For example, the determination may be made based upon whether a specified time has elapsed since the network resource last transmitted a multicast "Hello" message, whether the prior multicast "Hello" message has expired or some other criteria. As described in more detail hereinafter, the time intervals between multicast "Hello" messages does not have to be constant and may vary over time.

If, in step 216, a determination is made that it is not yet time for the network resource to transmit another multicast "Hello" message, then the flow returns to step 206 and the network resource again checks for receipt of a "Query" message. If, in step 216, a determination is made that it is time for the network resource to transmit another multicast "Hello" message, then the flow returns to step 204 and the network resource transmits another multicast "Hello" message.

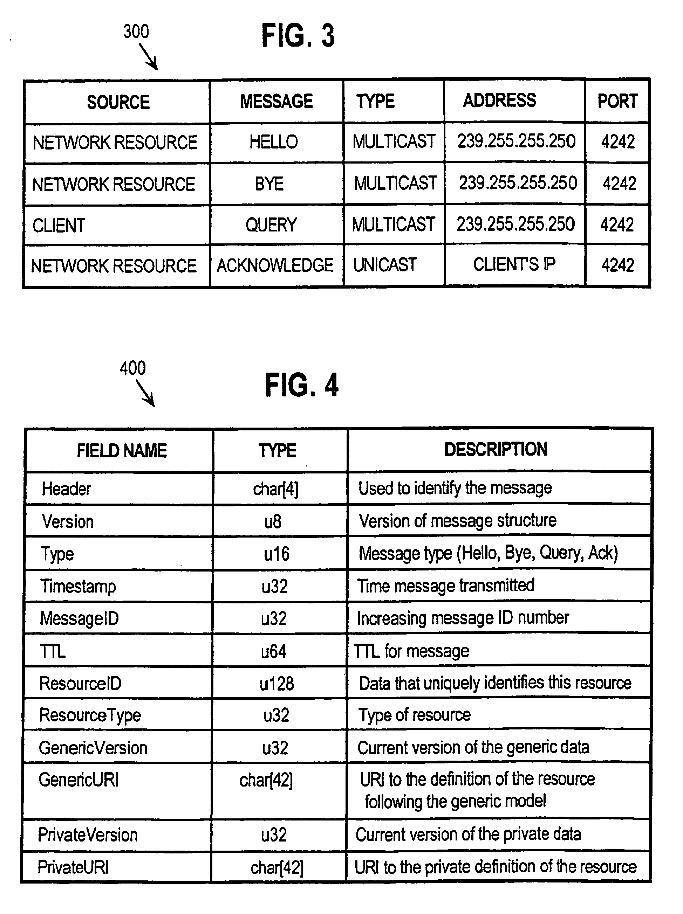

FIG. 3 is a table 300 that depicts four different types of messages used with the approach described herein for discovering network resources. As depicted in table 300, a network resource transmits three types of messages: a multicast "Hello" message, a multicast "Bye" message and a unicast "Acknowledge" message. A client transmits a multicast "Query" message. The IP addresses and ports depicted in FIG. 3 are provided for example purposes only and the approach is not limited to any particular IP address or IP address/port combination.

### IV. TRANSMISSION INTERVALS AND TIME-TO-LIVE

As previously described herein, conventional network resource discovery approaches often use messaging schemes that include a large number of messages which increases network traffic and computational overhead. According to one embodiment of the present approach, the duration of time intervals between multicast "Hello" messages transmitted by network resources is increased over time. This approach allows the initial duration between multicast "Hello" messages to be very short, increasing the likelihood that network resources will be discovered by interested clients. At the same time, the approach reduces overall network traffic by decreasing over time the rate at which network resources transmit additional multicast "Hello" messages. Also, as described herein, network resources can eventually stop transmitting multicast "Hello" messages and enter a sleep mode for a variety of reasons. Thus, the approach provides the benefits of a high transmission rate when a network resource first becomes available and a lower transmission rate later on, which reduces the amount of network traffic.

The time intervals between multicast "Hello" messages may increase linearly over time. For example, each time interval may be twice as long as the prior time interval. The time intervals between multicast "Hello" messages may also increase non-linearly over time. For example, the time intervals may increase exponentially or according to a specified function or pattern. A maximum time interval may also be used. When the maximum time interval is reached, then all subsequent time intervals stay at the maximum duration.

The initial duration between multicast "Hello" messages and the subsequent increase in interval duration and the maximum duration may be selected or "tuned" for a particular application, depending upon a wide variety of factors, such as the quality of the communications network on which the network services are transmitting and the potential adverse effects of the additional network traffic.

As described in more detail hereinafter, the duration of time intervals between multicast "Hello" messages may be expressed with respect to each message as a "time-to-live" (TTL). The TTL for a multicast "Hello" message indicates an amount of time that the message is considered to be "good" or "valid" before expiring. The TTL for a multicast "Hello" message is typically expressed relative to a prior point in time, for example, a time at which the multicast "Hello" message was transmitted. According to one embodiment of the invention, a multicast "Hello" message transmitted by a network resource includes a timestamp and a TTL. The TTL information allows a client to track a network resource and determine when the next multicast "Hello" message will be sent. The TTL information can also be used by a client device, for example by an administrator device, to determine whether a network resource is functioning normally. For example, an administration device may determine that a network resource is not operating normally if one or more multicast "Hello" messages are not received when expected, based upon the TTL information in a prior message.

### V. SIMPLE BINARY MESSAGE STRUCTURE

According to one embodiment of the invention, small binary message structure is used for the messages described herein. The use of a small binary message structure instead of a conventional long text message structure provides a fast an efficient message exchange. It also reduces fragmentation and increases reliability. Since the size of each message is very small and known in advance, the TCP/IP stack is less likely to dismiss a message because a fragment has been lost.

According to one embodiment of the invention, a Simple Binary Resource Discovery (SBRD) message structure is used with the messages described herein. FIG. 4 is a block diagram that depicts an example SBRD message structure 400. The example SBRD message structure 400 contains a variety of fields and a corresponding data type and description for each field. The "Header" field is used to identify the message as an SBRD message. For example, the "Header" field of an SBRD message may contain a four character string "SBRD". The "Version" field indicates the version of the SBRD message structure, to allow for different versions over time. The "Type" field specifies the type of message, i.e., a multicast "Hello" message, a multicast "Bye" message, a multicast "Query" message or a unicast "Acknowledge" message. The "Timestamp" field specifies a time at which the message was sent. The "MessageID" field specifies a unique ID for the message, for example an increasing message ID number. The "TTL" field specifies a TTL for the message. The "ResourceID" field contains data that identifies the network resource. An example of this data is a UUID. The "ResourceType" field contains data that specifies one or more type attributes of the network resource. For example, the "ResourceType" field may contain data that indicates a type of the network resource from a list of known network resource types.

The "GenericVersion" field specifies the current version of the generic data. The "GenericURI" field contains a URI to the definition of the network resource following the generic model. For example, this field may contain a URL of a Webpage or data file containing the generic data model. The generic data model may be public. One benefit of using the "GenericURI" field is that it eliminates the need to carry all the generic data in every message or retrieve the generic data for every message as long as a local copy (of the same version) is available. The "PrivateVersion" field specifies the current version of the private data. The "PrivateURI" field contains a URI to the private definition of the network resource. For example, this field may contain a URL of a Webpage, XML document or data file containing the private data model for the network resource. The private data model may only be known by particular network resources and clients, depending upon a particular implementation. The private data model may be used to support a variety of services. For example, the private data model may be used to support security, such as protocols and authentication. As with the "GenericURI" field, the "PrivateURI" field eliminates the need to carry all the private data in every message or retrieve the private data for every message as long as a local copy (of the same version) is available.

The "GenericURI" and "PrivateURI" fields may be limited in length. In situations where a URI is longer than the length allowed by the field, a tinyURI mechanism may be used to map a tinyURI to a full URI. For example, the URI http://mytinyuri.com/myresource may be mapped to http://myverylonguri.com/lotofstuff/todescribe/this/resource.

### VI. IMPLEMENTATION MECHANISMS

The approach described herein for network resource discovery is more flexible and involves less network traffic than conventional approaches. The various parameters related to time intervals between multicast messages may be selected to suit a particular implementation. Furthermore, the use of small binary messages reduces the amount of network overhead associated with network resource discovery while maintaining flexibility through the use of generic and private URIs.

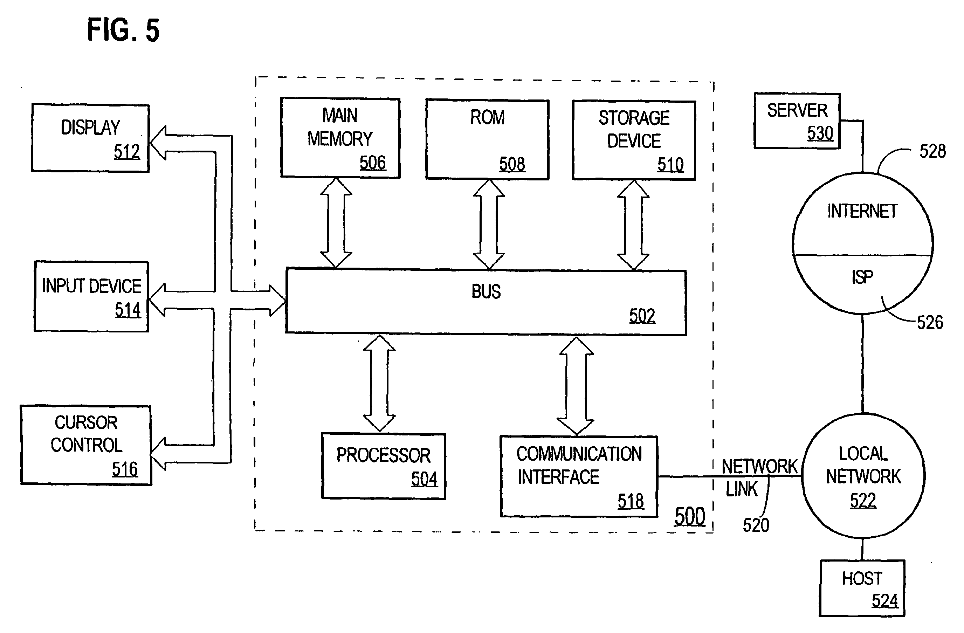

The approach may be implemented on any type of computing platform or in any type of mechanism or process, depending upon a particular implementation. For purposes of explanation, FIG. 5 is a block diagram that illustrates an example computer system 500 upon which an embodiment of the invention may be implemented. Computer system 500 includes a bus 502 or other communication mechanism for communicating information, and a processor 504 coupled with bus 502 for processing information. Computer system 500 also includes a main memory 506, such as a random access memory (RAM) or other dynamic storage device, coupled to bus 502 for storing information and instructions to be executed by processor 504. Main memory 506 also may be used for storing temporary variables or other intermediate information during execution of instructions to be executed by processor 504. Computer system 500 further includes a read only memory (ROM) 508 or other static storage device coupled to bus 502 for storing static information and instructions for processor 504. A storage device 510, such as a magnetic disk or optical disk, is provided and coupled to bus 502 for storing information and instructions.

Computer system 500 may be coupled via bus 502 to a display 512, such as a cathode ray tube (CRT), for displaying information to a computer user. An input device 514, including alphanumeric and other keys, is coupled to bus 502 for communicating information and command selections to processor 504. Another type of user input device is cursor control 516, such as a mouse, a trackball, or cursor direction keys for communicating direction information and command selections to processor 504 and for controlling cursor movement on display 512. This input device typically has two degrees of freedom in two axes, a first axis (e.g., x) and a second axis (e.g., y), that allows the device to specify positions in a plane.

The invention is related to the use of computer system 500 for implementing the techniques described herein. According to one embodiment of the invention, those techniques are performed by computer system 500 in response to processor 504 executing one or more sequences of one or more instructions contained in main memory 506. Such instructions may be read into main memory 506 from another machine-readable medium, such as storage device 510. Execution of the sequences of instructions contained in main memory 506 causes processor 504 to perform the process steps described herein. In alternative embodiments, hard-wired circuitry may be used in place of or in combination with software instructions to implement the invention. Thus, embodiments of the invention are not limited to any specific combination of hardware circuitry and software.

The term "machine-readable medium" as used herein refers to any medium that participates in providing data that causes a machine to operation in a specific fashion. In an embodiment implemented using computer system 500, various machine-readable media are involved, for example, in providing instructions to processor 504 for execution. Such a medium may take many forms, including but not limited to, non-volatile media, volatile media, and transmission media. Non-volatile media includes, for example, optical or magnetic disks, such as storage device 510. Volatile media includes dynamic memory, such as main memory 506. Transmission media includes coaxial cables, copper wire and fiber optics, including the wires that comprise bus 502. Transmission media can also take the form of acoustic or light waves, such as those generated during radio-wave and infra-red data communications.

Common forms of machine-readable media include, for example, a floppy disk, a flexible disk, hard disk, magnetic tape, or any other magnetic medium, a CD-ROM, any other optical medium, punchcards, papertape, any other physical medium with patterns of holes, a RAM, a PROM, and EPROM, a FLASH-EPROM, any other memory chip or cartridge, a carrier wave as described hereinafter, or any other medium from which a computer can read.

Various forms of machine-readable media may be involved in carrying one or more sequences of one or more instructions to processor 504 for execution. For example, the instructions may initially be carried on a magnetic disk of a remote computer. The remote computer can load the instructions into its dynamic memory and send the instructions over a telephone line using a modem. A modem local to computer system 500 can receive the data on the telephone line and use an infra-red transmitter to convert the data to an infra-red signal. An infra-red detector can receive the data carried in the infra-red signal and appropriate circuitry can place the data on bus 502. Bus 502 carries the data to main memory 506, from which processor 504 retrieves and executes the instructions. The instructions received by main memory 506 may optionally be stored on storage device 510 either before or after execution by processor 504.

Computer system 500 also includes a communication interface 518 coupled to bus 502. Communication interface 518 provides a two-way data communication coupling to a network link 520 that is connected to a local network 522. For example, communication interface 518 may be an integrated services digital network (ISDN) card or a modem to provide a data communication connection to a corresponding type of telephone line. As another example, communication interface 518 may be a local area network (LAN) card to provide a data communication connection to a compatible LAN. Wireless links may also be implemented. In any such implementation, communication interface 518 sends and receives electrical, electromagnetic or optical signals that carry digital data streams representing various types of information.

Network link 520 typically provides data communication through one or more networks to other data devices. For example, network link 520 may provide a connection through local network 522 to a host computer 524 or to data equipment operated by an Internet Service Provider (ISP) 526. ISP 526 in turn provides data communication services through the world wide packet data communication network now commonly referred to as the "Internet" 528. Local network 522 and Internet 528 both use electrical, electromagnetic or optical signals that carry digital data streams. The signals through the various networks and the signals on network link 520 and through communication interface 518, which carry the digital data to and from computer system 500, are exemplary forms of carrier waves transporting the information.

Computer system 500 can send messages and receive data, including program code, through the network(s), network link 520 and communication interface 518. In the Internet example, a server 530 might transmit a requested code for an application program through Internet 528, ISP 526, local network 522 and communication interface 518. The received code may be executed by processor 504 as it is received, and/or stored in storage device 510, or other non-volatile storage for later execution. In this manner, computer system 500 may obtain application code in the form of a carrier wave.

In the foregoing specification, embodiments of the invention have been described with reference to numerous specific details that may vary from implementation to implementation. Thus, the sole and exclusive indicator of what is, and is intended by the applicants to be, the invention is the set of claims that issue from this application, in the specific form in which such claims issue, including any subsequent correction. Hence, no limitation, element, property, feature, advantage or attribute that is not expressly recited in a claim should limit the scope of such claim in any way. The specification and drawings are, accordingly, to be regarded in an illustrative rather than a restrictive sense.

## Claims

1. A network resource configured to:
generate and transmit (204) a plurality of multicast messages to a plurality of recipients over a communications network (116), wherein:
each multicast message from the plurality of multicast messages indicates that the network resource is available and ready;
in response to receiving (206) a multicast query-message from a particular recipient from the plurality of recipients,
determining (208) whether the multicast query message contains identification data that identifies the network resource or type data that matches one or more type attributes of the network resource; and
if the multicast query message contains identification data that identifies the network resource or type data that matches one or more type attributes of the network resource, then the network resource generating and transmitting (210) a unicast message to the particular recipient to acknowledge the multicast query message and to indicate that the network resource is available and ready;
**characterised in that:**
time intervals between the transmission of multicast messages from the plurality of multicast messages increase in duration over time; and
the network resource further configured to enter (214) a sleep mode after a specified time has elapsed or a specified number of multicast messages have been transmitted by the network resource without the network resource receiving an acknowledge signal (212).

2. The network resource as recited in Claim 1, wherein the time intervals between the transmission of the multicast messages from the plurality of multicast messages increase linearly in duration over time.

3. The network resource as recited in Claim 1, wherein the time intervals between the transmission of the multicast messages from the plurality of multicast messages increase non-linearly in duration over time.

4. The network resource as recited in any one of Claims 1 to 3, wherein the plurality of multicast messages are transmitted to a multicast Internet Protocol address and port.

5. The network resource as recited in any one of Claims 1 to 4, wherein each of the plurality of multicast messages includes
timestamp data the indicates a time when the multicast message was transmitted, and
data that indicates an amount of time that the multicast message is valid from the time indicated by the timestamp data.

6. The network resource as recited in any one of Claims 1 to 5, wherein each of the plurality of multicast messages includes identification data that identifies the network resource.

7. The network resource as recited in any one of Claims 1 to 6, wherein each of the plurality of multicast messages includes resource type data that identifies one or more type attributes of the network resource.

8. The network resource as recited in any one of Claims 1 to 7, wherein each of the plurality of multicast messages includes message type data that identifies the type of the multicast message.

9. The network resource as recited in any one of Claims 1 to 8, wherein each of the plurality of multicast messages includes
a first URI that references a generic message data model, and
a second URI that references a private message data model.

10. The network resource as recited in Claim 9, wherein each of the plurality of multicast messages includes
first version data that references a current version of the generic message data model, and
second version data that references a current version of the private message data model.

11. The network resource as recited in any one of Claims 1 to 10, wherein the plurality of multicast messages, the multicast query message and the unicast message all conform.to a binary message format.

12. A method of determining availability of a network resource, in which the network resource:
generates and transmits (204) a plurality of multicast messages to a plurality of recipients over a communications network (116), wherein:
each multicast message from the plurality of multicast messages indicates that the network resource is available and ready;
in response to receiving (206) a multicast query message from a particular recipient from the plurality of recipients, the network resource
determines (208) whether the multicast query message contains identification data that identifies the network resource or type data that matches one or more type attributes of the network resource; and
if the multicast query message contains identification data that identifies the network resource or type data that matches one or more type attributes of the network resource, then the network resource generates and transmits (210) a unicast message to the particular recipient to acknowledge the multicast query message and to indicate that the network resource is available and ready;
**characterised in that:**
time intervals between the transmission of multicast messages from the plurality of multicast messages increase in duration over time; and
the network resource enters (214) a sleep mode after a specified time has elapsed or a specified number of multicast messages have been transmitted by the network resource without the network resource receiving an acknowledge signal (212).

13. The method as recited in claim 12, wherein the time intervals between the transmission of the multicast messages from the plurality of multicast messages increase linearly in duration over time.

14. The method as recited in Claim 12, wherein the time interval between the transmission of the multicast messages from the plurality of multicast messages increase non-linearly in duration over time.

15. The method as recited in any one of Claims 12 to 14, wherein the plurality of multicast messages are transmitted to a multicast Internet Protocol address and port.

16. The method as recited in any one of Claims 12 to 15, wherein each of the plurality of multicast messages includes
timestamp data the indicates a time when the multicast message was transmitted, and
data that indicates an amount of time that the multicast message is valid from the time indicated by the timestamp data.

17. The method as recited in any one of Claims 12 to 16, wherein each of the plurality of multicast messages includes identification data that identifies the network resource.

18. The method as recited in any one of Claims 12 to 17, wherein each of the plurality of multicast messages includes resource type data that identifies one or more type attributes of the network resource.

19. The method as recited in any one of Claims 12 to 18, wherein each of the plurality of multicast messages includes message type data that identifies the type of the multicast message.

20. The method as recited in any one of Claims 12 to 19, wherein each of the plurality of multicast messages includes
a first URI that references a generic message data model, and
a second URI that references a private message data model.

21. The method as recited in Claim 20, wherein each of the plurality of multicast messages includes
first version data that references a current version of the generic message data model, and
second version data that references a current version of the private message data model.

22. The method as recited in any one of Claims 12 to 21, wherein the plurality of multicast messages, the multicast query message and the unicast message all conform to a binary message format.

23. A computer program which, when executed on a computer system instructs the computer system to perform the method of any one of claims 12 to 22.

## Patentansprüche

1. Netzbetriebsmittel, das konfiguriert ist, um:
mehrere Sammelnachrichten zu erzeugen und über ein Kommunikationsnetz (116) an mehrere Empfänger zu senden (204), wobei:
jede Sammelnachricht der mehreren Sammelnachrichten angibt, dass das Netzbetriebsmittel verfügbar und bereit ist;
in Reaktion auf den Empfang (206) einer Sammelabfragenachricht von einem bestimmten Empfänger der mehreren Empfänger
zu bestimmen (208), ob die Sammelabfragenachricht Kenndaten enthält, die das Netzbetriebsmittel oder Typdaten, die mit einem oder mehreren Typattributen des Netzbetriebsmittels übereinstimmen, identifizieren; und
falls die Sammelabfragenachricht Kenndaten enthält, die das Netzbetriebsmittel oder Typdaten, die mit einem oder mehreren Typattributen des Netzbetriebsmittels übereinstimmen, identifizieren, durch das Netzbetriebsmittel eine Einzelnachricht zu erzeugen und an den bestimmten Empfänger zu senden (210), um die Sammelabfragenachricht zu quittieren und um anzugeben, dass das Netzbetriebsmittel verfügbar und bereit ist;
**dadurch gekennzeichnet, dass:**
Zeitintervalle zwischen dem Senden von Sammelnachrichten der mehreren Sammelnachrichten im Verlauf der Zeit eine zunehmende Dauer haben; und
das Netzbetriebsmittel ferner konfiguriert ist, um nach Verstreichen einer bestimmten Zeit oder nachdem eine bestimmte Anzahl von Sammelnachrichten durch das Netzbetriebsmittel gesendet worden ist, ohne dass das Netzbetriebsmittel ein Quittierungssignal (212) empfängt, in einen Ruhemodus einzutreten (214).

2. Netzbetriebsmittel nach Anspruch 1, wobei die Zeitintervalle zwischen dem Senden der Sammelnachrichten der mehreren Sammelnachrichten im Verlauf der Zeit linear zunehmen.

3. Netzbetriebsmittel nach Anspruch 1, wobei die Zeitintervalle zwischen dem Senden der Sammelnachrichten der mehreren Sammelnachrichten im Verlauf der Zeit nichtlinear zunehmen.

4. Netzbetriebsmittel nach einem der Ansprüche 1 bis 3, wobei die mehreren Sammelnachrichten zu einer Sammel-Internetprotokoll-Adresse und einem Sammel-Port gesendet werden.

5. Netzbetriebsmittel nach einem der Ansprüche 1 bis 4, wobei jede der mehreren Sammelnachrichten umfasst:
Zeitstempeldaten, die einen Zeitpunkt angeben, zu dem die Sammelnachricht gesendet worden ist, und
Daten, die einen Zeitbetrag angeben, in dem die Sammelnachricht beginnend bei dem durch die Zeitstempeldaten angegebenen Zeitpunkt gültig ist.

6. Netzbetriebsmittel nach einem der Ansprüche 1 bis 5, wobei jede der mehreren Sammelnachrichten Kenndaten enthält, die das Netzbetriebsmittel identifizieren.

7. Netzbetriebsmittel nach einem der Ansprüche 1 bis 6, wobei jede der mehreren Sammelnachrichten Betriebsmitteltyp-Daten enthält, die ein oder mehrere Typattribute des Netzbetriebsmittels identifizieren.

8. Netzbetriebsmittel nach einem der Ansprüche 1 bis 7, wobei jede der mehreren Sammelnachrichten Nachrichtentyp-Daten enthält, die den Typ der Sammelnachricht identifizieren.

9. Netzbetriebsmittel nach einem der Ansprüche 1 bis 8, wobei jede der mehreren Sammelnachrichten umfasst:
eine erste URI, die sich auf ein generisches Nachrichtendatenmodell bezieht, und
eine zweite URI, die sich auf ein privates Nachrichtendatenmodell bezieht.

10. Netzbetriebsmittel nach Anspruch 9, wobei jede der mehreren Sammelnachrichten umfasst:
erste Versionsdaten, die sich auf eine aktuelle Version des generischen Nachrichtendatenmodells beziehen, und
zweite Versionsdaten, die sich auf eine aktuelle Version des privaten Nachrichtendatenmodells beziehen.

11. Netzbetriebsmittel nach einem der Ansprüche 1 bis 10, wobei die mehreren Sammelnachrichten, die Sammelabfragenachricht und die Einzelnachricht alle mit einem binären Nachrichtenformat konform sind.

12. Verfahren zum Bestimmen der Verfügbarkeit eines Netzbetriebsmittels, in dem das Netzbetriebsmittel:
mehrere Sammelnachrichten erzeugt und über ein Kommunikationsnetz (116) an mehrere Empfänger sendet (204), wobei
jede Sammelnachricht der mehreren Sammelnachrichten angibt, dass das Netzbetriebsmittel verfügbar und bereit ist;
in Reaktion auf den Empfang (206) einer Sammelabfragenachricht von einem bestimmten Empfänger der mehreren Empfänger
bestimmt (208), ob die Sammelabfragenachricht Kenndaten enthält, die das Netzbetriebsmittel oder Typdaten, die mit einem oder mehreren Typattributen des Netzbetriebsmittels übereinstimmen, identifizieren; und
falls die Sammelabfragenachricht Kenndaten enthält, die das Netzbetriebsmittel oder Typdaten, die mit einem oder mehreren Typattributen des Netzbetriebsmittels übereinstimmen, identifizieren, eine Einzelnachricht erzeugt und an den bestimmten Empfänger sendet (210), um die Sammelabfragenachricht zu quittieren und um anzugeben, dass das Netzbetriebsmittel verfügbar und bereit ist;
**dadurch gekennzeichnet, dass:**
Zeitintervalle zwischen dem Senden von Sammelnachrichten der mehreren Sammelnachrichten im Verlauf der Zeit zunehmen; und
das Netzbetriebsmittel nach Verstreichen einer bestimmten Zeit oder nachdem eine bestimmte Anzahl von Sammelnachrichten durch das Netzbetriebsmittel gesendet worden ist, ohne dass das Netzbetriebsmittel ein Quittierungssignal (212) empfängt, in einen Ruhemodus eintritt (214).

13. Verfahren nach Anspruch 12, wobei die Zeitintervalle zwischen dem Senden der Sammelnachrichten der mehreren Sammelnachrichten im Verlauf der Zeit linear zunehmen.

14. Verfahren nach Anspruch 12, wobei das Zeitintervall zwischen dem Senden der Sammelnachrichten der mehreren Sammelnachrichten im Verlauf der Zeit nichtlinear zunimmt.

15. Verfahren nach einem der Ansprüche 12 bis 14, wobei die mehreren Sammelnachrichten zu einer Sammel-Internetprotokoll-Adresse und zu einem Sammel-Port gesendet werden.

16. Verfahren nach einem der Ansprüche 12 bis 15, wobei jede der mehreren Sammelnachrichten umfasst:
Zeitstempeldaten, die einen Zeitpunkt angeben, zu dem die Sammelnachricht gesendet wurde, und
Daten, die einen Zeitbetrag angeben, in dem die Sammelnachricht beginnend bei dem durch die Zeitstempeldaten angegebenen Zeitpunkt gültig ist.

17. Verfahren nach einem der Ansprüche 12 bis 16, wobei jede der mehreren Sammelnachrichten Kenndaten enthält, die das Netzbetriebsmittel identifizieren.

18. Verfahren nach einem der Ansprüche 12 bis 17, wobei jede der mehreren Sammelnachrichten Betriebsmitteltyp-Daten enthält, die ein oder mehrere Typattribute des Netzbetriebsmittels identifizieren.

19. Verfahren nach einem der Ansprüche 12 bis 18, wobei jede der mehreren Sammelnachrichten Nachrichtentyp-Daten enthält, die den Typ der Sammelnachricht identifizieren.

20. Verfahren nach einem der Ansprüche 12 bis 19, wobei jede der mehreren Sammelnachrichten umfasst:
eine erste URI, die sich auf ein generisches Nachrichtendatenmodell bezieht, und
eine zweite URI, die sich auf ein privates Nachrichtendatenmodell bezieht.

21. Verfahren nach Anspruch 20, wobei jede der mehreren Sammelnachrichten umfasst:
erste Versionsdaten, die sich auf eine aktuelle Version des generischen Nachrichtendatenmodells beziehen, und
zweite Versionsdaten, die sich auf eine aktuelle Version des privaten Nachrichtenmodells beziehen.

22. Verfahren nach einem der Ansprüche 12 bis 21, wobei die mehreren Sammelnachrichten, die Sammelabfragenachricht und die Einzelnachricht alle mit einem binären Nachrichtenformat konform sind.

23. Computerprogramm, das dann, wenn es auf einem Computersystem ausgeführt wird, das Computersystem anweist, das Verfahren nach einem der Ansprüche 12 bis 22 auszuführen.

## Revendications

1. Ressource de réseau configurée :
pour engendrer et émettre (204) une pluralité de messages multidiffusés vers une pluralité de destinataires sur un réseau (116) de télécommunications, dans laquelle :
chaque message multidiffusé de la pluralité de messages multidiffusés indique que la ressource de réseau est disponible et prête ;
pour, en réponse à la réception (206) d'un message multidiffusé d'interrogation provenant d'un destinataire particulier de la pluralité de destinataires,
déterminer (208) si le message multidiffusé d'interrogation contient des données d'identification qui identifient la ressource de réseau ou des données de type qui concordent avec un ou plusieurs attributs de type de la ressource de réseau ; et
pour que, si le message multidiffusé d'interrogation contient des données d'identification qui identifient la ressource de réseau ou des données de type qui concordent avec un ou plusieurs attributs de type de la ressource de réseau, alors la ressource de réseau engendre et émette (210) un message monodiffusé vers le destinataire particulier pour accuser réception du message multidiffusé d'interrogation et pour indiquer que la ressource de réseau est disponible et prête ;
**caractérisée :**
**en ce que** les intervalles temporels entre les émissions des messages multidiffusés de la pluralité de messages multidiffusés augmentent en durée avec le temps ; et
**en ce que** la ressource de réseau est en outre configurée pour entrer (214) en mode sommeil après qu'un temps spécifié s'est écoulé ou après qu'un nombre spécifié de messages multidiffusés a été émis par la ressource de réseau sans que la ressource de réseau reçoive un signal (212) d'accusé de réception.

2. Ressource de réseau selon la revendication 1, dans laquelle les intervalles temporels entre les émissions des messages multidiffusés de la pluralité de messages multidiffusés augmentent linéairement en durée avec le temps.

3. Ressource de réseau selon la revendication 1, dans laquelle les intervalles temporels entre les émissions des messages multidiffusés de la pluralité de messages multidiffusés augmentent de façon non linéaire en durée avec le temps.

4. Ressource de réseau selon l'une quelconque des revendications 1 à 3, dans laquelle la pluralité de messages multidiffusés est transmise à une adresse et un port de multidiffusion sous protocole d'Internet.

5. Ressource de réseau selon l'une quelconque des revendications 1 à 4, dans laquelle chacun de la pluralité de messages multidiffusés inclut :
des données d'horodatage qui indiquent l'heure à laquelle le message multidiffusé a été émis ; et
des données qui indiquent une longueur de temps pendant laquelle le message multidiffusé est valide à partir de l'heure indiquée par les données d'horodatage.

6. Ressource de réseau selon l'une quelconque des revendications 1 à 5, dans laquelle chacun de la pluralité de messages multidiffusés inclut des données d'identification qui identifient la ressource de réseau.

7. Ressource de réseau selon l'une quelconque des revendications 1 à 6, dans laquelle chacun de la pluralité de messages multidiffusés inclut des données de type de ressource qui identifient un ou plusieurs attributs de type de la ressource de réseau.

8. Ressource de réseau selon l'une quelconque des revendications 1 à 7, dans laquelle chacun de la pluralité de messages multidiffusés inclut des données de type de message qui identifient le type du message multidiffusé.

9. Ressource de réseau selon l'une quelconque des revendications 1 à 8, dans laquelle chacun de la pluralité de messages multidiffusés inclut :
un premier identifiant universel de ressource (URI pour "Universal Resource Identifier") qui se réfère à un modèle générique de données de message ; et
un second URI qui se réfère à un modèle privé de données de message.

10. Ressource de réseau selon la revendication 9, dans laquelle chacun de la pluralité de messages multidiffusés inclut :
des premières données de version qui se réfèrent à une version actuelle du modèle générique de données de message ; et
des secondes données de version qui se réfèrent à une version actuelle du modèle privé de données de message.

11. Ressource de réseau selon l'une quelconque des revendications 1 à 10, dans laquelle la pluralité de messages multidiffusés, le message multidiffusé d'interrogation et le message monodiffusé se conforment tous à un format binaire de message.

12. Procédé de détermination de la disponibilité d'une ressource de réseau, dans lequel la ressource de réseau :
engendre et émet (204) une pluralité de messages multidiffusés vers une pluralité de destinataires sur un réseau (116) de télécommunications, dans lequel :
chaque message multidiffusé de la pluralité de messages multidiffusés indique que la ressource de réseau est disponible et prête ;
dans lequel, en réponse à la réception (206) d'un message multidiffusé d'interrogation provenant d'un destinataire particulier de la pluralité de destinataires, la ressource de réseau :
détermine (208) si le message multidiffusé d'interrogation contient des données d'identification qui identifient la ressource de réseau ou des données de type qui concordent avec un ou plusieurs attributs de type de la ressource de réseau ; et
dans lequel, si le message multidiffusé d'interrogation contient des données d'identification qui identifient la ressource de réseau ou des données de type qui concordent avec un ou plusieurs attributs de type de la ressource de réseau, alors la ressource de réseau engendre et émet (210) un message monodiffusé vers le destinataire particulier pour accuser réception du message multidiffusé d'interrogation et pour indiquer que la ressource de réseau est disponible et prête ;
**caractérisé :**
**en ce que** les intervalles temporels entre les émissions des messages multidiffusés de la pluralité de messages multidiffusés augmentent en durée avec le temps ; et
**en ce que** la ressource de réseau entre (214) en mode sommeil après qu'un temps spécifié s'est écoulé ou après qu'un nombre spécifié de messages multidiffusés a été émis par la ressource de réseau sans que la ressource de réseau reçoive un signal (212) d'accusé de réception.

13. Procédé selon la revendication 12, dans lequel les intervalles temporels entre les émissions des messages multidiffusés de la pluralité de messages multidiffusés augmentent linéairement en durée avec le temps.

14. Procédé selon la revendication 12, dans lequel les intervalles temporels entre les émissions des messages multidiffusés de la pluralité de messages multidiffusés augmentent de façon non linéaire en durée avec le temps.

15. Procédé selon l'une quelconque des revendications 12 à 14, dans lequel la pluralité de messages multidiffusés est transmise à une adresse et un port de multidiffusion sous protocole d'Internet.

16. Procédé selon l'une quelconque des revendications 12 à 15, dans lequel chacun de la pluralité de messages multidiffusés inclut :
des données d'horodatage qui indiquent l'heure à laquelle le message multidiffusé a été émis ; et
des données qui indiquent une longueur de temps pendant laquelle le message multidiffusé est valide à partir de l'heure indiquée par les données d'horodatage.

17. Procédé selon l'une quelconque des revendications 12 à 16, dans lequel chacun de la pluralité de messages multidiffusés inclut des données d'identification qui identifient la ressource de réseau.

18. Procédé selon l'une quelconque des revendications 12 à 17, dans lequel chacun de la pluralité de messages multidiffusés inclut des données de type de ressource qui identifient un ou plusieurs attributs de type de la ressource de réseau.

19. Procédé selon l'une quelconque des revendications 12 à 18, dans lequel chacun de la pluralité de messages multidiffusés inclut des données de type de message qui identifient le type du message multidiffusé.

20. Procédé selon l'une quelconque des revendications 12 à 19, dans lequel chacun de la pluralité de messages multidiffusés inclut :
un premier URI qui se réfère à un modèle générique de données de message ; et
un second URI qui se réfère à un modèle privé de données de message.

21. Procédé selon la revendication 20, dans lequel chacun de la pluralité de messages multidiffusés inclut :
des premières données de version qui se réfèrent à une version actuelle du modèle générique de données de message ; et
des secondes données de version qui se réfèrent à une version actuelle du modèle privé de données de message.

22. Procédé selon l'une quelconque des revendications 12 à 21, dans lequel la pluralité de messages multidiffusés, le message multidiffusé d'interrogation et le message monodiffusé se conforment tous à un format binaire de message.

23. Programme informatique qui, lorsqu'il est exécuté sur un système informatique, ordonne au système informatique de mettre en oeuvre le procédé selon l'une quelconque des revendications 12 à 22.
